# EUROPEAN PATENT SPECIFICATION

(11) **EP 2 067 693 B1**
(45) Date of publication and mention of the grant of the patent: **22.03.2017**
(21) Application number: 08006138.5
(22) Date of filing: 28.03.2008
(51) Int. Cl.: B62K 19/34, B62M 3/00

(54) **Bottom bracket assembly of bicycle**
Tretlageranordnung eines Fahrrads
Ensemble de pédalier de bicyclette

(30) Priority: 05.12.2007 IT MI20070406 U
(43) Date of publication of application: 10.06.2009
(73) Proprietor: CAMPAGNOLO S.r.l., 36100 Vicenza (VI) (IT)
(72) Inventor: Pasqua, Paolo, 36043 Camisano Vicentino (Vicenza) (IT); Babini, Vittorio, 31044 Montebelluna (Treviso) (IT)
(74) Representative: Castiglia, Paolo

(56) References cited:
- EP-A1- 1 792 818
- EP-A1- 1 792 821
- EP-A2- 1 120 336
- EP-A2- 1 659 057
- EP-A2- 1 661 803

## Description

The present invention concerns a bottom bracket assembly of bicycle.

The present invention also concerns a shaft for such an assembly and a crank arm assembly comprising the aforementioned bottom bracket assembly of bicycle.

The present invention also concerns a bicycle comprising the aforementioned bottom bracket assembly of bicycle. Preferably, the aforementioned bicycle is a racing bicycle.

As known, a bottom bracket assembly of bicycle comprises a shaft rotatably supported in a housing box suitably provided in the bicycle frame and two crank arms associated with the opposite ends of the shaft. The shaft can be made in a distinct piece from the crank arms or it can be made in a single piece with one of the two crank arms. Alternatively the shaft can be made in two or more pieces connected together through suitable connection means, each piece being formed integrally or not with a respective crank arm.

For the sake of simplicity of explanation, in the rest of the present description and in the subsequent claims, it shall be often referred, apart from when expressly indicated the contrary, to a shaft made in a single piece, with it in any case being understood that what has been described is also valid in the case in which the shaft is made in a plurality of pieces.

Moreover, in the rest of the present description the component of the bottom bracket assembly of bicycle consisting of the shaft (or of a shaft element) and of a crank arm, mutually coupled or formed in a single piece, is identified with the expression "crank arm assembly".

As known, the rotation of the shaft of the bottom bracket assembly with respect to the housing box of such a shaft is achieved through the use of a couple of rolling bearings mounted on the shaft. In particular, each bearing is typically mounted on the shaft at a respective end portion of the shaft body, in a position adjacent to the crank arm. When the bottom bracket assembly is mounted on the bicycle frame, each bearing is thus operatively interposed between the shaft and the respective housing box provided in the bicycle frame.

EP 1 759 981 and EP 1 792 818 describe bottom bracket assemblies in which the bearings are supported outside of the aforementioned box through suitable substantially annular shaped adaptation elements. Such adaptation elements are mounted at the opposite free ends of the shaft-housing box. The mounting of the bearings outside of such a box allows the bearings to be brought nearer to the crank arms, thus reducing the bending moment generated at the ends of the shaft due to the pedalling of the cyclist.

Moreover, the use of adaptation elements for the coupling of the bearings with the shaft-housing box allows crank arms to be used in which the axial distance between the face of the crank arm intended to be directed towards the shaft in the area of connection to the shaft and the face of the crank arm intended to be directed towards the pedal in the area of connection to the pedal is less than the crank arms used in bottom bracket assemblies in which the aforementioned adaptation elements are not used. Indeed, considering that the distance between the face of the crank arm intended to be directed towards the pedal in the area of connection to the pedal and the middle plane of the bicycle frame is substantially predetermined by the Q factor of the bicycle, the crank arm that can be used in the bottom bracket assemblies of the two prior art documents described above is straighter, and consequently stronger or, keeping the same structural strength, lighter than those used in the bottom bracket assemblies which are not provided with adaptation elements.

Typically, in the known systems described above, the dimensions of the housing box of the shaft of the bottom bracket assembly and the dimensions of the individual components of the bottom bracket assembly, i.e. of the bearings, of the possible adaptation elements and of the shaft, are selected so as to ensure a desired rigidity in terms, for example, of resistance to the bending moment and to the torsional moment acting upon the shaft of the bottom bracket assembly due to the action imparted by the cyclist during the pedalling.

For this purpose, the housing box of the shaft of the bottom bracket assembly typically consists of a hollow cylinder of standard length equal to 68mm. Such a cylinder is internally threaded at its opposite free ends to receive, by screwing, a corresponding threaded portion of the respective adaptation element. Standardised threadings M36 x 24 tpi (teeth per inch) or BC-1.37" x 24 tpi are typically used, made on a diameter of the cylinder of about 34 mm. The shaft used is typically made from steel and has an outer diameter of 25 mm. Each bearing has an inner diameter of 25 mm and an outer diameter of 37 mm, whereas the distance between the median planes of the two bearings, along the longitudinal direction of the shaft, is equal to about 85 mm.

EP 1 120 336 describes a bottom bracket assembly in which the bearings are supported inside the box provided in the bicycle frame, without interposition of any adaptation element. In this case, the outer diameter of the shaft has values greater than 25.4 mm, preferably equal to about 30 mm. The shaft can be made from various materials, like steel, aluminium, carbon fibre, titanium etc. The box, in the housing area of the bearings has an inner diameter equal to 42 mm, to receive standard bearings 61806-2RS, having an inner diameter equal to 30 mm and an outer diameter equal to 42 mm. Also in this case the box has a standard length of 68 mm, whereas the axial distance between the median planes of the two bearings is equal to about 60 mm.

EP 1 792 821 discloses a bottom bracket assembly of a bicycle comprising two crank arms, an axle integral in rotation with the cranks and two bearings for the rotatable support of the assembly with respect to a box of the frame of the bicycle. Each of the bearings is arranged outside the box and inside the thickness of one of the respective cranks.

EP 1 659 057 discloses a bicycle crankshaft assembly with reinforcement fibers for structural reinforcement, said assembly including a crank axle with two juxtaposed axle ends, each having a crank arm connected to it, further including two bearings, spaced from each other and surrounding said crank axle at each axle end for rotation of the crank axle about its axis. At least the crank axle includes said reinforcement fibers and is an integral crank axle that simultaneously contacts both bearings. The crank axle has an outside diameter in the range of 22 mm to 35 mm.

Object of the present invention is to provide a bottom bracket assembly of bicycle that, maintaining the characteristics of rigidity peculiar to the bottom bracket assemblies of the prior art, allows it to have its weight reduced.

The present invention therefore concerns, in a first aspect thereof, a bottom bracket assembly of bicycle, as recited in claim 1.

The Applicant has been able to see that the increased dimension of the outer diameter of the shaft of the bottom bracket assembly of the present invention with respect to the shafts of the assemblies described in EP 1 759 981 and EP 1 792 818 makes it possible to use, for the same rigidity of the shaft, shafts made from a lighter material, like for example aluminium or carbon fibre, or to further reduce the thickness of the shaft, if made from steel. In any case, it is obtained a decrease in weight of the shaft and therefore of the bottom bracket assembly comprising such a shaft.

Moreover, the increased distance between the median planes of the bearings, with respect to the assembly described in EP 1 120 336, actually bringing the bearings nearer to the crank arms, has the effect of keeping down the bending moment generated at the end portions of the shaft.

In a first preferred embodiment of the bottom bracket assembly of the present invention, a central portion of the shaft, defined between the opposite end portions, has an outer diameter equal to that of the opposite end portions.

In a further preferred embodiment of the bottom bracket assembly of the present invention, a central portion of the shaft, defined between the opposite end portions, has a different outer diameter to that of the opposite end portions. For example, advantageously, in order to make the shaft even lighter, the aforementioned central portion, which is less stressed than the end portions, can have a smaller outer diameter than that of the aforementioned end portions.

Preferably, the aforementioned bearings have an outer diameter comprised in the range between 40 mm and 47 mm, bounds being included. In this way, for the assembly according to the present invention bearings can be used having an inner diameter corresponding to the outer diameter of the end portions of the shaft - i.e. comprised in the range between 28 mm and 37 mm - which can easily be found on the market.

The aforementioned shaft can be made from metallic material, preferably aluminium or steel.

In this case, the aforementioned shaft is hollow and preferably, at a central portion thereof, has a thickness shorter than, or equal to, 2 mm when it is made from aluminium, or a thickness shorter than, or equal to, 0.65 mm when it is made from steel. In this way, the shaft advantageously has a lower weight than those made from aluminium or steel of the prior art.

Alternatively, the aforementioned shaft can be made from composite material. Preferably, the aforementioned composite material comprises structural fibres incorporated in a matrix of polymeric material, like for example carbon fibres.

In a preferred embodiment of the bottom bracket assembly of the present invention, the aforementioned composite material comprises layers of fabric of structural fibres incorporated in a matrix of polymeric material. Preferably, the fibres of the aforementioned fabric are orientated according to two substantially perpendicular directions, each inclined by about 45° with respect to the longitudinal direction.

In the case in which the shaft is made from composite material, the aforementioned shaft is hollow and preferably, at a central portion thereof, has a thickness shorter than, or equal to, 3.5 mm. In this way, the shaft advantageously has a lower weight than those made from composite material of the prior art.

In a bottom bracket assembly which is out of the scope of the invention, at least one bearing of the couple of bearings is coupled with a respective adaptation element intended to be associated with a free end portion of the housing box. In this way, the length of the housing box, measured along the predetermined longitudinal direction, can advantageously be shorter than the aforementioned distance between the median planes of the bearings.

Preferably, the aforementioned adaptation element comprises a substantially cylindrical portion of coupling with the housing box, the cylindrical portion having an outer diameter comprised in the range between 40 mm and 48 mm, bounds being included.

In the assembly of the present invention, the aforementioned bearings are intended to be directly coupled with respective free end portions of the housing box.

In any case, the aforementioned shaft can be made in a single piece or it can comprise at least two distinct shaft elements, connected together through mutual coupling means.

Preferably, the aforementioned two shaft elements are mutually connected at respective free coupling ends provided with respective conjugate front toothings, preferably of the Hirth type. Such front toothings allow a precise centring between the shaft elements.

It is also disclosed a shaft for a bottom bracket assembly of bicycle, comprising a body extending along a predetermined longitudinal direction and provided, at its opposite end portions, with respective seats for the coupling with respective bearings, characterised in that said end portions have an outer diameter comprised in the range between 28 mm and 37 mm, bounds being included, and in that the distance between the median planes of said seats along said longitudinal direction is comprised in the range between 80 mm and 100 mm, bounds being included.

Preferably, such a shaft individually or in combination has all of the structural and functional characteristics discussed above with reference to the shaft of the aforementioned bottom bracket assembly of bicycle.

In particular, in a preferred embodiment thereof, a central portion of the aforementioned shaft body, defined between the aforementioned opposite end portions, has an outer diameter equal to that of such opposite end portions.

Alternatively, a central portion of the aforementioned shaft body, defined between the aforementioned opposite end portions, has an outer diameter different to that of such opposite end portions.

The aforementioned shaft can be made from metallic material, preferably aluminium or steel.

In this case, the aforementioned shaft is hollow and preferably, at a central portion thereof, has a thickness shorter than, or equal to, 2 mm, when it is made from aluminium, or a thickness shorter than, or equal to, 0.65 mm, when it is made from steel.

Alternatively, the aforementioned shaft can be made from composite material. Preferably, the aforementioned composite material comprises structural fibres incorporated in a matrix of polymeric material, like for example carbon fibres.

In a preferred embodiment of the aforementioned shaft, the aforementioned composite material comprises layers of fabric of structural fibres incorporated in a matrix of polymeric material. Preferably, the fibres of the aforementioned fabric are orientated according to two substantially perpendicular directions, each inclined by about 45° with respect to the longitudinal direction.

In the case in which the shaft is made from composite material, the aforementioned shaft is hollow and preferably, at a central portion thereof, has a thickness shorter than, or equal to, 3.5 mm.

In any case, the aforementioned shaft can be made in a single piece or it can comprise at least two distinct shaft elements, connected together through mutual coupling means.

Preferably, the aforementioned two shaft elements are mutually connected at respective free coupling ends provided with respective conjugate front toothings, preferably of the Hirth type.

In a second aspect thereof, the present invention concerns a crank arm assembly comprising a bottom bracket assembly according to claim 1.

Preferably, such a crank arm assembly individually or in combination has all of the structural and functional characteristics discussed above with reference to the aforementioned bottom bracket assembly and therefore it has all of the aforementioned advantages.

In a third aspect thereof, the present invention concerns a bicycle comprising a bottom bracket assembly according to claim 1.

Preferably, such a bicycle individually or in combination has all of the structural and functional characteristics discussed above with reference to the aforementioned bottom bracket assembly and therefore it has all of the aforementioned advantages.

Further characteristics and advantages of the present invention shall become clearer from the following detailed description of preferred embodiments thereof, made with reference to the attached drawings and given for indicating and not limiting purposes. In such drawings:
- figures 1, 2, 3 schematically represent respective longitudinal section views of different embodiments of a bottom bracket assembly of bicycle which are out of the scope of the present invention.
- figure 4 schematically represents a longitudinal section view of an embodiment of a bottom bracket assembly of bicycle according to the present invention.

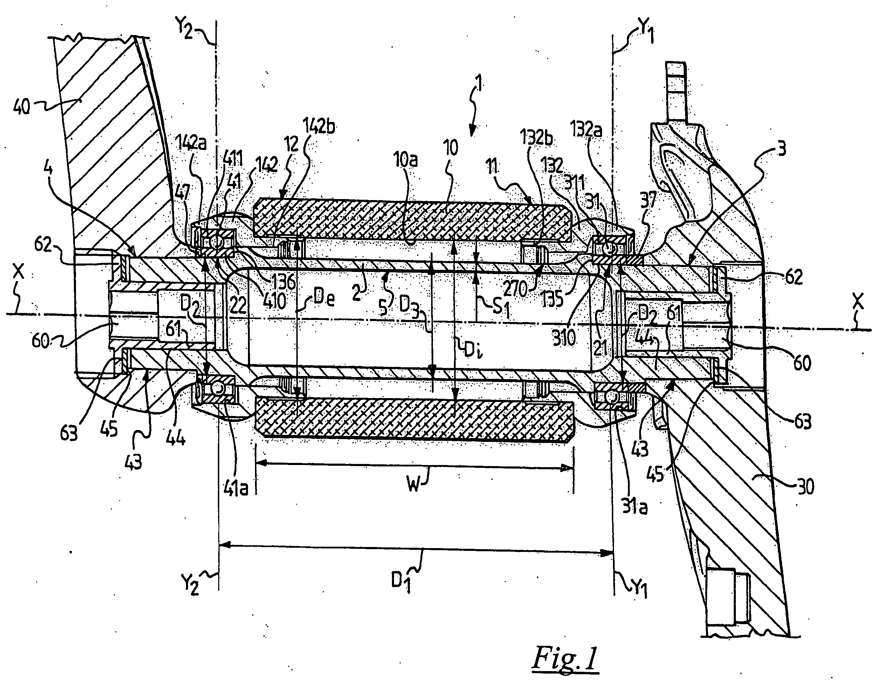

With reference to figure 1, a bottom bracket assembly of bicycle in accordance with a first embodiment out of the scope of the present invention is indicated with 1.

The assembly 1 comprises a shaft 2 having a longitudinal axis X-X extending along a predetermined longitudinal direction x. The shaft 2 comprises opposite end portions 3 and 4, right and left respectively, with which a right crank arm 30 and a left crank arm 40 are respectively associated.

The shaft 2 is rotatably supported in a housing box 10 appropriately provided in the bicycle frame through the interposition of a right radial bearing 31 and of a left radial bearing 41 suitably mounted on the shaft 2 at the aforementioned end portions 3 and 4.

Regarding this, the shaft 2, at the end portions 3 and 4, has a couple of shoulders 135 and 136 formed in one piece with the body of the shaft 2 and defining in the shaft 2 seats for the coupling with the aforementioned bearings 31 and 41. In the assembled configuration of the bottom bracket assembly of figure 1, the bearings 31 and 41 are thus mounted on the end portions 3 and 4 of the shaft 2 in position adjacent to the crank arms 30 and 40.

The box 10 is defined by a substantially cylindrical hollow body 10a with axial length W and inner diameter Di. The body 10a extends along a longitudinal axis intended to coincide with the axis X-X of the shaft 2 when such a shaft is housed in the cavity of the box 10.

Between the bearings 31 and 41 and the box 10 a right adaptation element 132 and a left adaptation element 142 are respectively prearranged, both substantially annular shaped.

In particular, the bearings 31 and 41 are respectively inserted into a seat 31a of the right adaptation element 132 and into a seat 41a of the left adaptation element 142. Such seats 31a and 41a are made at axially outer end portions 132a and 142a, respectively of the adaptation elements 132 and 142.

The opposite axially inner end portions 132b and 142b, respectively of the adaptation elements 132 and 142, are substantially cylindrical shaped with outer diameter De and are externally threaded to screw into conjugate internally threaded end portions 11 and 12 of the body 10a of the box 10. The body 10a of the box 10 thus has an inner diameter equal to Di apart from at the aforementioned internally threaded end portions 11 and 12, where the body 10a of the box 10 has a maximum inner diameter (at the bottom of the threading), greater than Di.

The median planes Y1 and Y2 of each bearing 31 and 41, i.e. the planes perpendicular to the axis X-X and passing halfway through each bearing 31 and 41, are spaced apart by a distance-between-centres D1.

In its assembled configuration, the bearing 31 has an inner ring 310 coupled with a portion 21 of the shaft 2, of diameter D2 and an outer ring 311 coupled with the seat 31a of the right adaptation element 132. Similarly, the bearing 41 has an inner ring 410 coupled with a portion 22 of the shaft 2, of diameter D2 an outer ring 411 coupled with the seat 41a of the left adaptation element 142.

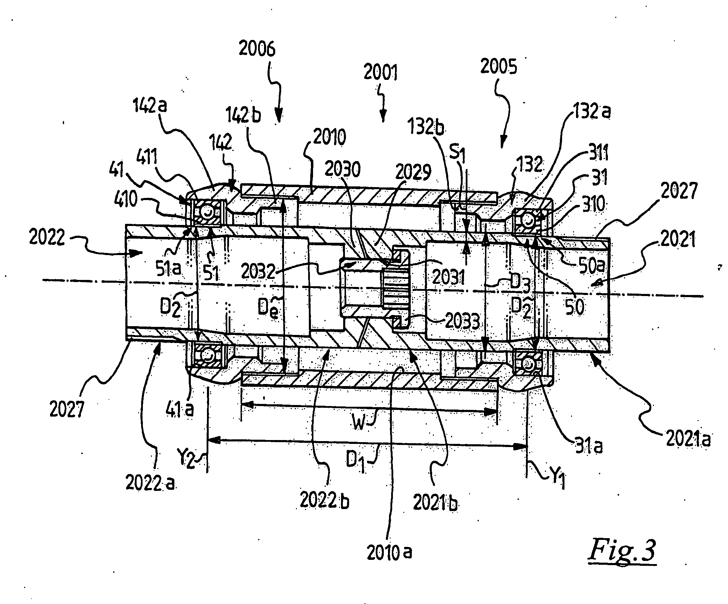

The right and left crank arms 30, 40 are coupled with the right and left ends 3 and 4 of the shaft 2 through a shape coupling (defined for example by ridges and grooves) that allows a displacement of the crank arms 30, 40 with respect to the shaft 2 parallely to the axis X-X of the shaft 2 (as described in EP 1 820 726 with reference to figure 3).

The locking of the right crank arm 30 (or the left one 40, respectively) on the right end portion 3 (or the left end portion 4, respectively) of the shaft 2 in a desired axial position is achieved through a screw 60 screwed into a threaded hole 61 made in the right end portion 3 (or the left end portion 4, respectively) of the shaft 2.

The screw 60 is inserted into the hole 43 of the right crank arm 30 (or the left one 40, respectively) and has a head 62 intended to go into abutment against the shoulder 45 formed in the hole 43 of the right crank arm 30 (or the left one 40, respectively). Between the shoulder 45 and the head 62 of the screw 60 a washer 63 is interposed to improve the distribution of the tensions between screw 60 and the respective abutment face defined in the right end portion 3 (or the left end portion 4, respectively) of the shaft 2.

The shaft 2 comprises, between the right end portion 3 and the left end portion 4, a central portion 5 of constant outer diameter D3. In the non-limiting example of figure 1, D3 is substantially equal to D2. The shaft 2 can be made from a material selected from aluminium, steel or a composite material, comprising structural fibres incorporated in a matrix of polymeric material or layers of fabric of structural fibres incorporated in a matrix of polymeric material. Preferably, the aforementioned structural fibre of the shaft 2 is carbon fibre. Moreover, preferably the fibres of the aforementioned fabric are orientated according to two substantially perpendicular directions, each inclined by about 45° with respect to the longitudinal direction x.

The shaft 2 is defined by a substantially cylindrical hollow body having, in its central portion 5, thickness S1.

Between the right crank arm 30 and the inner ring 310 of the right bearing 31 a right spacer 37 is interposed. Alternatively, the spacer 37 can be omitted in the case in which the body of the right crank arm 30 is shaped, at the hole 43 and on the side directed towards the adaptation element 132, so as to go directly into abutment against the inner ring 310 of the right bearing 31.

Each bearing 31, 41 is inserted onto the shaft 2 from a respective end thereof and is pushed against the respective shoulder 135, 136 by the respective crank arm 30, 40, when it is mounted on the respective end portion 3, 4 screwing in the respective screw 60.

The bottom bracket assembly 1 preferably has a distance-between-centres D1 comprised between 80 and 100 mm, a diameter D2 comprised between 28 and 37 mm, an inner diameter of the bearings 31 and 41 comprised between 28 and 37 mm, an outer diameter of the bearings 31 and 41 comprised between 40 and 47 mm and a diameter De comprised between 40 and 48 mm.

The Applicant has identified as being particularly advantageous a bottom bracket assembly 1 having a distance-between-centres D1 equal to about 85 mm, a diameter D2 equal to about 30 mm or 35 mm, an inner diameter of the bearings 31 and 41 equal to about 30 mm an outer diameter of the bearings 31 and 41 equal to about 42 mm and a diameter De equal to about 42 mm.

In the case in which the shaft 2 is made from aluminium, the thickness S1 is preferably less than, or equal to; 2 mm if the diameter D2 is equal to about 30 mm, whereas it is preferably less than, or equal to, 1.2 mm if the diameter D2 is equal to about 35 mm. More preferably, the thickness S1 is equal to about 1.8 mm if the diameter D2 is equal to about 30 mm, whereas it is equal to about 1 mm if the diameter D2 is equal to about 35 mm.

In the case of a shaft made from composite material with structural fibres incorporated in a matrix of polymeric material, the thickness S1 is preferably less than, or equal to, 3.5 mm if the diameter D2 is equal to about 30 mm, whereas it is preferably less than, or equal to, 2 mm if the diameter D2 is equal to about 35 mm. More preferably, the thickness S1 is equal to about 2.5 mm if the diameter D2 is equal to about 30 mm, whereas it is equal to about 1.2 mm if the diameter D2 is equal to about 35 mm.

In the case of a shaft made from steel, the thickness. S1 is preferably less than, or equal to, 0.65 mm if the diameter D2 is equal to about 30 mm, whereas it is preferably less than, or equal to, 0.5 mm if the diameter D2 is equal to about 35 mm. More preferably, the thickness S1 is equal to about 0.55 mm if the diameter D2 is equal to about 30 mm, whereas it is equal to about 0.3 mm if the diameter D2 is equal to about 35 mm.

In the non-limiting example of figure 1, the diameter D3 of the shaft 2 is equal to the diameter D2. In alternative solutions, however, the diameter D3 can be different to the diameter D2 (either greater or smaller, possibly providing suitable shapings), just as the thickness S1 of the shaft 2 can vary along the axis X-X.

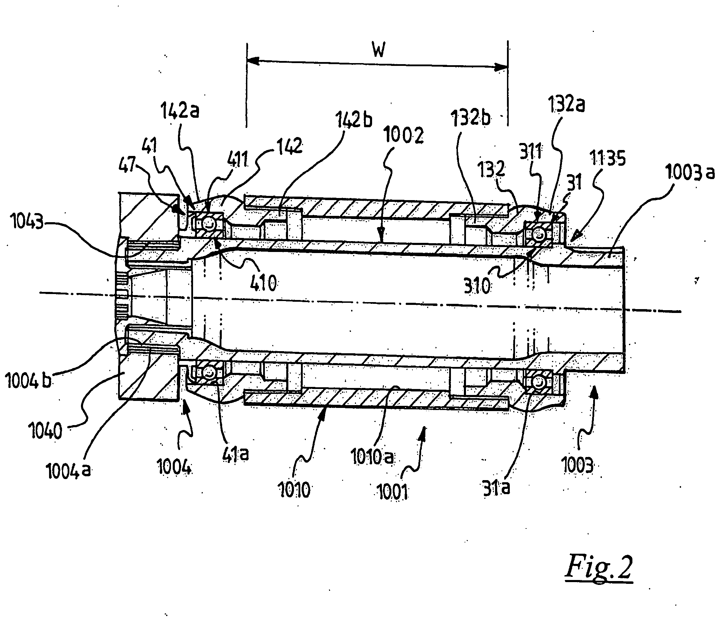

Figure 2 shows a second embodiment of a bottom bracket assembly out of the scope of the present invention, which is globally indicated with 1001.

In figure 2, structural elements identical to those of the assembly 1 described above with reference to figure 1, shall be indicated with the same reference numerals and they shall not be described any further, whereas equivalent elements from the functional point of view to those of the assembly of figure 1 shall be indicated with the same reference numeral of figure 1 increased by 1000.

In particular, the assembly 1001 differs from the assembly 1 above all in that the shaft 1002 has a single shoulder 1135 arranged at the right end portion 1003 of the shaft 1002.

The right bearing 31 rests with its inner ring 310 on such a shoulder 1135 and with its outer ring 311 on the seat 31a of the adaptation element 132. The bearing 31 is mounted on the shaft 1002 in an axially inner position with respect to the shoulder 1135.

The left bearing 41 rests with its outer ring 411 on the seat 41a of the adaptation element 142.

The right end portion 1003 of the shaft 1002 has connection means, in the specific example an outer threading 1003a, for the connection to the right crank arm, not illustrated in figure 2.

The left end portion 1004 of the shaft 1002 has connection means, in the specific example a grooved profile 1004a, for the connection to the left crank arm 1040. In this case, as illustrated, the hole 1043 of the left crank arm 1040 has a grooved profile 1004b which is conjugated to the profile 1004a.

Between the left crank arm 1040 and the inner and outer rings 410 and 411 of the left bearing 41 a spacer 47 is operatively interposed that, when the left crank arm 1040 is mounted in final position, pushes the left bearing 41 into the seat 41a of the adaptation element 142, so as to achieve the axial locking of the assembly 1001.

Figure 3 shows a third embodiment of a bottom bracket assembly out of the scope of the present invention, which is globally indicated with 2001.

In figure 3, structural elements identical to those of the assembly 1 described above with reference to figure 1, shall be indicated with the same reference numerals and they shall not be described any further, whereas equivalent elements from the functional point of view to those of the assembly of figure 1 shall be indicated with the same reference numeral as figure 1 increased by 2000.

In particular, the bottom bracket assembly 2001 comprises two right and left crank arm assemblies 2005, 2006, each comprising a crank arm (not shown) and a shaft element 2021, 2022 having substantially tubular shape.

The bottom bracket assembly 2001 is housed in the hollow body 2010a of the housing box 2010 suitably provided in the bicycle frame.

In the box 2010 the crank arm assemblies 2005, 2006 are supported in rotation about a longitudinal axis X-X of the respective shaft elements 2021, 2022 through bearings 31, 41 arranged in first end portions 2021a, 2022a of the shaft elements 2021, 2022.

The first end portions 2021a, 2022a of the shaft elements 2021, 2022 have an outer diameter D2. The bearings 31, 41 are operatively interposed between the shaft elements 2021, 2022 and the adaptation elements 132, 142.

In particular, the axially inner end portions 132b and 142b of the adaptation elements 132, 142 of outer diameter De are screwed to the hollow body 2010a of the box 2010 at its opposite externally threaded end portions. The opposite axially outer ends 132a and 142a of the adaptation elements 132, 142 comprise the seats 31a and 41a for the outer rings 311, 411 of the bearings 31, 41. The median planes Y1 and Y2 of each bearing 31 and 41 are spaced apart by a distance-between-centres D1.

Preferably, the inner ring 310, 410 of the bearings 31, 41 is in contact with an annular element 50, 51 (preferably metallic), mounted outside such first end portions 2021a, 2022a. The annular element 50, 51 comprises, externally in radial direction, a shoulder 50a, 51a, against which the inner ring 310, 410 of the bearings 31, 41 is in abutment.

The crank arm assemblies 2005, 2006 are coupled together at second end portions 2021b, 2022b of the shaft elements 2021, 2022. The second end portions 2021b, 2022b have an outer diameter D3 and have a radial thickness S1 that, preferably, is less than the radial thickness of the first end portions 2021a, 2022a.

The second end portions 2021b, 2022b comprise, at the respective free ends 2029, 2030, conjugate front toothings, preferably of the "Hirth" type. Such toothings allow a precise centring between the crank arm assemblies 2005, 2006.

The ends 2029, 2030, respectively, have a through hole 2031 and a threaded hole 2032, coaxial with respect to the shaft elements 2021, 2022, for the insertion of a threaded element 2033, which ensures that the coupling between the shaft elements 2021, 2022 is maintained during the operation.

The preferred numerical values of the diameters D2, D3 and De, of the distance-between-centres D1 and of the thickness S1, as well as the values of the inner and outer diameters of the bearings 31 and 41, preferably correspond to those indicated above in reference to the assembly 1 of figure 1.

At the free end portion 2021a, the shaft element 2021 has coupling means with the right crank arm (not shown), in the illustrated example an outer threading 2027.

The right crank arm (not shown), at a free end thereof, has a coupling seat, preferably comprising a through hole, for its mounting on the shaft element 2021. At the coupling seat coupling means are defined that are conjugated with respect to those of the shaft element 2021. In particular, in the illustrated example, the coupling means of the crank arm comprise an inner threading.

The interface between the outer threading 2027 on the shaft element 2021 and the inner threading on the right crank arm is typically filled with adhesive material, so as to avoid the possibility of unscrewings during the operation.

In an analogous way the shaft element 2022 is connected to the left crank arm (not shown).

In the solutions described above, the coupling between the adaptation elements 132, 142 and the hollow body 10a, 1010a and 2010a is by screwing (through threadings of known type).

In alternative solutions such a coupling can take place by mechanical interference and/or gluing. For such a coupling by mechanical interference and/or gluing different conjugate shapes between the adaptation element and the inner cavity of the box can be provided, which are per se conventional. It is also possible to provide holding ribs to avoid mutual rotations between the adaptation element and the inner cavity of the box, also per se conventional.

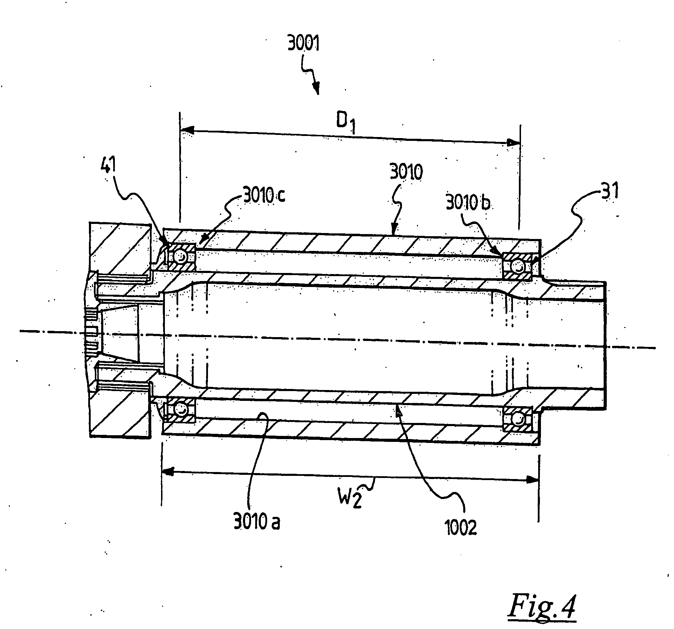

Figure 4 shows an embodiment of a bottom bracket assembly according to the present invention, which is globally indicated with 3001.

In figure 4, structural elements identical to those of the assembly 1001 described above with reference to figure 2, shall be indicated with the same reference numerals and they shall not be described any further, whereas equivalent elements from the functional point of view to those of the assembly of figure 2 shall be indicated with the same reference numeral as figure 2 increased by 2000.

The bottom bracket assembly 3001 differs from the bottom bracket assembly 1001 of figure 2 substantially just in that it does not have the adaptation elements 132, 142 of receiving of the bearings 31, 41.

On the contrary, the bearings 31, 41 are mounted directly on the inner surface of the hollow body 3010a of the housing box 3010 of the shaft 1002. Moreover, the bearings 31, 41 are in abutment on respective shoulders 3010b, 3010c formed on the inner surface of the hollow body 3010a of the box 3010.

The box 3010 has a greater axial length W2 than the axial length W of the box 1010 of figure 2 and is preferably equal to about 95 mm.

Of course, a man skilled in the art can bring numerous modifications and variants to the bottom bracket assembly of bicycle described above, in order to satisfy specific and contingent requirements, all of which are, moreover, covered by the scope of protection of the present invention as defined by the following claims.

## Claims

1. Bottom bracket assembly (3001) of bicycle, comprising:
- a shaft (1002) extending along a predetermined longitudinal direction (x);
- a couple of bearings (31, 41) adapted to rotatably support said shaft (1002) with respect to a housing box (3010) provided in a bicycle frame, said bearings (31, 41) being mounted on said shaft (1002) at opposite end portions of said shaft (1002);
wherein said opposite end portions of said shaft (1002) have an outer diameter comprised in the range between 28 mm and 37 mm, bounds being included, and in that the distance (D1) between the median planes of said bearings (31, 41) along said longitudinal direction (x) is comprised in the range between 80 mm and 100 mm, bounds being included;
**characterised in that** said bearings (31, 41) are directly mountable on respective free end portions of said housing box (3010) with no interposition of adaptation elements between each bearing (31, 41) and the respective free end portions of said housing box (3010).

2. Bottom bracket assembly (3001) according to claim 1, wherein a central portion of said shaft (1002), defined between said opposite end portions, has an outer diameter equal to that of said opposite end portions.

3. Bottom bracket assembly (3001) according to claim 1, wherein a central portion of said shaft, defined between said opposite end portions, has a different outer diameter (D3) to that of said opposite end portions.

4. Bottom bracket assembly (3001) according to any one of the previous claims, wherein said bearings (31, 41) have an outer diameter comprised in the range between 40 mm and 47 mm, bounds being included.

5. Bottom bracket assembly (3001) according to any one of the previous claims, wherein said shaft (1002) is made from metallic material.

6. Bottom bracket assembly (3001) according to claim 5, wherein said shaft (1002) is made from aluminium.

7. Bottom bracket assembly (3001) according to claim 5, wherein said shaft (1002) is made from steel.

8. Bottom bracket assembly (3001) according to any one of claims 1 to 4, wherein said shaft (1002) is made from composite material.

9. Bottom bracket assembly (3001) according to claim 8, wherein said composite material comprises structural fibres incorporated in a matrix of polymeric material.

10. Bottom bracket assembly (3001) according to claim 9, wherein said composite material comprises layers of fabric of structural fibres incorporated in a matrix of polymeric material.

11. Bottom bracket assembly (3001) according to claim 6, wherein said shaft (1002) is hollow and has, at at least a central portion thereof, a thickness shorter than, or equal to, 2 mm.

12. Bottom bracket assembly (3001) according to claim 7, wherein said shaft (1002) is hollow and has, at at least a central portion thereof, a thickness shorter than, or equal to, 0.65 mm.

13. Bottom bracket assembly (3001) according to any one of claims 8 to 10, wherein said shaft (1002) is hollow and has, at at least a central portion thereof, a thickness shorter than, or equal to, 3.5 mm.

14. Bottom bracket assembly (3001) according to any one of the previous claims, wherein said shaft (1002) is made in a single piece.

15. Bottom bracket assembly according to any one of claims 1 to 13, wherein said shaft comprises at least two distinct shaft elements, connected together through mutual coupling means.

16. Bottom bracket assembly according to claim 15, wherein said at least two shaft elements are mutually connected at respective free coupling ends provided with respective conjugate front toothings.

17. Bottom bracket assembly according to claim 16, wherein said conjugate front toothings are of the Hirth type.

18. Crank arm assembly comprising a bottom bracket assembly (3001) according to any one of claims 1 to 17.

19. Bicycle comprising a bottom bracket assembly (3001) according to any one of claims 1 to 17.

## Patentansprüche

1. Tretlageranordnung (3001) eines Fahrrads, umfassend:
eine Welle (1002), die sich entlang einer vorgegebenen Längsrichtung (x) erstreckt;
ein Paar von Lagern (31, 41), die dazu eingerichtet sind, die Welle (1002) bezüglich eines Gehäuses (3010) drehbar zu lagern, das in einem Fahrradrahmen angeordnet ist, wobei die Lager (31, 41) an der Welle (1002) an gegenüberliegenden Endabschnitten der Welle (1002) montiert sind;
wobei die gegenüberliegenden Endabschnitte der Welle (1002) einen Außendurchmesser in dem Bereich zwischen 28 mm und 37 mm einschließlich der jeweiligen Grenzwerte aufweisen, und die Distanz (D1) zwischen den Mittelebenen der Lager (31, 41) entlang der Längsrichtung (x) im Bereich zwischen 80 mm und 100 mm einschließlich der jeweiligen Grenzwerte liegt;
**dadurch gekennzeichnet, dass** die Lager (31, 41) direkt an den jeweiligen freien Endabschnitten des Gehäuses (3010) montierbar sind, ohne dass Anpassungselemente zwischen den jeweiligen Lagern (31, 41) und den jeweiligen freien Endabschnitten des Gehäuses (3010) angeordnet sind.

2. Tretlageranordnung (3001) nach Anspruch 1, wobei ein zentraler Abschnitt der Welle (1002), der zwischen den gegenüberliegenden Endabschnitten definiert ist, einen Außendurchmesser gleich dem der gegenüberliegenden Endabschnitte aufweist.

3. Tretlageranordnung (3001) nach Anspruch 1, wobei ein zentraler Abschnitt der Welle, der zwischen den gegenüberliegenden Endabschnitten definiert ist, einen anderen Außendurchmesser (D3) als die gegenüberliegenden Endabschnitte aufweist.

4. Tretlageranordnung (3001) nach einem der vorhergehenden Ansprüche, wobei die Lager (31, 41) einen Außendurchmesser im Bereich zwischen 40 mm und 47 mm einschließlich der Grenzwerte aufweisen.

5. Tretlageranordnung (3001) nach einem der vorhergehenden Ansprüche, wobei die Welle (1002) aus einem metallischen Material besteht.

6. Tretlageranordnung (3001) nach Anspruch 5, wobei die Welle (1002) aus Aluminium besteht.

7. Tretlageranordnung (3001) nach Anspruch 5, wobei die Welle (1002) aus Stahl besteht.

8. Tretlageranordnung (3001) nach einem der Ansprüche 1 bis 4, wobei die Welle (1002) aus einem Verbundmaterial besteht.

9. Tretlageranordnung (3001) nach Anspruch 8, wobei das Verbundmaterial strukturelle Fasern umfasst, die in eine Matrix aus Polymermaterial eingearbeitet sind.

10. Tretlageranordnung (3001) nach Anspruch 9, wobei das Verbundmaterial Gewebeschichten aus strukturellen Fasern umfasst, die in eine Matrix aus Polymermaterial eingearbeitet sind.

11. Tretlageranordnung (3001) nach Anspruch 6, wobei die Welle (1002) hohl ist und zumindest an einem zentralen Abschnitt eine Dicke von weniger oder gleich 2 mm aufweist.

12. Tretlageranordnung (3001) nach Anspruch 7, wobei die Welle (1002) hohl ist und zumindest an einem zentralen Abschnitt eine Dicke von weniger oder gleich 0,65 mm aufweist.

13. Tretlageranordnung (3001) nach einem der Ansprüche 8 bis 10, wobei die Welle (1002) hohl ist und zumindest an einem zentralen Abschnitt eine Dicke von weniger oder gleich 3,5 mm aufweist.

14. Tretlageranordnung (3001) nach einem der vorhergehenden Ansprüche, wobei die Welle (1002) aus einem einzigen Stück besteht.

15. Tretlageranordnung nach einem der Ansprüche 1 bis 13, wobei die Welle mindestens zwei verschiedene Wellenelemente aufweist, die durch wechselseitige Kopplungsmittel miteinander verbunden sind.

16. Tretlageranordnung nach Anspruch 15, wobei die mindestens zwei Wellenelemente wechselseitig an jeweils freien Kopplungsenden verbunden sind, die jeweils mit korrespondierenden vorderen Zähnen versehen sind.

17. Tretlageranordnung nach Anspruch 16, wobei die korrespondierenden vorderen Zähne vom Hirth-Typ sind.

18. Kurbelarmanordnung, die eine Tretlageranordnung (3001) nach einem der Ansprüche 1 bis 17 umfasst.

19. Fahrrad, das eine Tretlageranordnung (3001) nach einem der Ansprüche 1 bis 17 umfasst.

## Revendications

1. Ensemble de pédalier (3001) d'une bicyclette, comprenant :
- un axe (1002) s'étendant le long d'une direction longitudinale prédéterminée (x) ;
- une paire de roulements (31, 41) destinés à supporter en rotation ledit axe (1002) par rapport à un boîtier de pédalier (3010) prévu dans un cadre de bicyclette, lesdits roulements (31, 41) étant montés sur ledit axe (1002) au niveau de parties d'extrémités opposées dudit axe (1002) ;
dans lequel lesdites parties d'extrémités opposées dudit axe (1002) ont un diamètre extérieur compris dans la plage entre 28 mm et 37 mm, les bornes étant incluses, et en ce que la distance (D1) entre les plans médians desdits roulement (31, 41) le long de ladite direction longitudinale (x) est comprise dans la plage entre 80 mm et 100 mm, les bornes étant incluses ;
**caractérisé en ce que** lesdits roulements (31, 41) peuvent être montés directement sur des parties d'extrémités libres respectives dudit boîtier de pédalier (3010) sans interposition d'éléments d'adaptation entre chaque roulement (31, 41) et les parties d'extrémités libres respectives dudit boîtier de pédalier (3010).

2. Ensemble de pédalier (3001) selon la revendication 1, dans lequel une partie centrale dudit axe (1002), définie entre lesdites parties d'extrémités opposées, a un diamètre extérieur égal à celui desdites parties d'extrémités opposées.

3. Ensemble de pédalier (3001) selon la revendication 1, dans lequel une partie centrale dudit axe, définie entre lesdites parties d'extrémités opposées, a un diamètre extérieur (D3) différent de celui desdites parties d'extrémités opposées.

4. Ensemble de pédalier (3001) selon l'une quelconque des revendications précédentes, dans lequel lesdits roulements (31, 41) ont un diamètre extérieur compris dans la plage entre 40 mm et 47 mm, les bornes étant incluses.

5. Ensemble de pédalier (3001) selon l'une quelconque des revendications précédentes, dans lequel ledit axe (1002) est réalisé à partir d'un matériau métallique.

6. Ensemble de pédalier (3001) selon la revendication 5, dans lequel ledit axe (1002) est réalisé à partir d'aluminium.

7. Ensemble de pédalier (3001) selon la revendication 5, dans lequel ledit axe (1002) est réalisé à partir d'acier.

8. Ensemble de pédalier (3001) selon l'une quelconque des revendications 1 à 4, dans lequel ledit axe (1002) est réalisé à partir d'un matériau composite.

9. Ensemble de pédalier (3001) selon la revendication 8, dans lequel ledit matériau composite comprend des fibres structurelles incorporées dans une matrice d'un matériau polymère.

10. Ensemble de pédalier (3001) selon la revendication 9, dans lequel ledit matériau composite comprend des couches d'un tissu de fibres structurelles incorporées dans une matrice d'un matériau polymère.

11. Ensemble de pédalier (3001) selon la revendication 6, dans lequel ledit axe (1002) est creux et a, au moins au niveau d'une partie centrale de celui-ci, une épaisseur inférieure, ou égale, à 2 mm.

12. Ensemble de pédalier (3001) selon la revendication 7, dans lequel ledit axe (1002) est creux et a, au moins au niveau d'une partie centrale de celui-ci, une épaisseur inférieure, ou égale, à 0,65 mm.

13. Ensemble de pédalier (3001) selon l'une quelconque des revendications 8 à 10, dans lequel ledit axe (1002) est creux et a, au moins au niveau d'une partie centrale de celui-ci, une épaisseur inférieure, ou égale, à 3,5 mm.

14. Ensemble de pédalier (3001) selon l'une quelconque des revendications précédentes, dans lequel ledit axe (1002) est réalisé en une seule pièce.

15. Ensemble de pédalier selon l'une quelconque des revendications 1 à 13, dans lequel ledit axe comprend au moins deux éléments d'axes distincts, connectés ensemble par le biais d'un moyen de couplage mutuel.

16. Ensemble de pédalier selon la revendication 15, dans lequel lesdits au moins deux éléments d'axes sont connectés mutuellement au niveau d'extrémités de couplage libres respectives avec des dentures avant conjuguées respectives.

17. Ensemble de pédalier selon la revendication 16, dans lequel lesdites dentures avant conjuguées sont de type Hirth.

18. Ensemble de manivelle comprenant un ensemble de pédalier (3001) selon l'une quelconque des revendications 1 à 17.

19. Bicyclette comprenant un ensemble de pédalier (3001) selon l'une quelconque des revendications 1 à 17.
